(19) Europäisches Patentamt
European Patent Office
Office européen des brevets

(11) **EP 4 510 688 A1**

(12) **EUROPEAN PATENT APPLICATION**
published in accordance with Art. 153(4) EPC

(43) Date of publication:
**19.02.2025  Bulletin 2025/08**

(21) Application number: 23799225.0

(22) Date of filing: **28.04.2023**

(51) International Patent Classification (IPC):
**H04W 24/10** (2009.01)     **H04W 72/04** (2023.01)
**H04L 5/00** (2006.01)

(52) Cooperative Patent Classification (CPC):
**H04B 17/309; H04L 5/00; H04W 24/10;**
**H04W 72/04**

(86) International application number:
**PCT/CN2023/091601**

(87) International publication number:
**WO 2023/213239 (09.11.2023 Gazette 2023/45)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **06.05.2022  CN 202210486820**

(71) Applicants:
• **CHINA MOBILE COMMUNICATION CO., LTD**
  **RESEARCH INSTITUTE**
  **Beijing 100053 (CN)**
• **CHINA MOBILE COMMUNICATIONS GROUP CO.,**
  **LTD.**
  **Beijing 100032 (CN)**

(72) Inventors:
• **CAO, Yuhua**
  **Beijing 100032 (CN)**
• **ZUO, Jun**
  **Beijing 100032 (CN)**
• **LI, Yan**
  **Beijing 100032 (CN)**
• **ZHENG, Yi**
  **Beijing 100032 (CN)**
• **ZHANG, Jingwen**
  **Beijing 100032 (CN)**

(74) Representative: **Murgitroyd & Company**
  **165-169 Scotland Street**
  **Glasgow G5 8PL (GB)**

(54) **REFERENCE SIGNAL CONFIGURATION METHOD, STATE INFORMATION REPORTING METHOD, AND RELATED DEVICE**

(57)    A reference signal configuration method, a method for reporting state information and related device are provided, which relate to the field of wireless technology, to solve the problem that the current reference signal configuration or transmission method leads to low CSI measurement efficiency. The method includes: configuring at least one group of reference signal resources, each group of reference signal resources including at least two reference signals.

configuring at least one group of reference signal resources, each group of reference signal resources including at least two reference signals — 101

**Fig. 2**

**Description**

**CROSS REFERENCE OF RELATED APPLICATION**

The present disclosure claims a priority of Chinese patent disclosure No. 202210486820.0 filed on May 6, 2022, which are incorporated herein by reference in its entirety.

**TECHNICAL FIELD**

The present disclosure relates to the field of wireless technology, and in particular to a reference signal configuration method, a method for reporting state information and related device.

**BACKGROUND**

Channel State Information (CSI) is an indicator to measure the quality of a channel. The base station will send a configured Channel State Information Reference Signal (CSI-RS) to the User Equipment (UE). The UE will perform channel measurement and interference measurement based on the reference signal sent by the base station, obtain CSI and report it to the base station, so that the base station can adjust the scheduling and beam management-related work according to the CSI reported by the UE.

In medium and high-speed mobile scenarios, channel conditions usually change rapidly, so the UE needs to frequently report CSI to the base station so that the base station can adjust scheduling and manage beams according to the current channel conditions. However, the current reference signal configuration or transmission method results in low CSI measurement efficiency.

**SUMMARY**

The embodiments of the present disclosure provide a reference signal configuration method, a method for reporting state information and related device, to solve the problem that the current reference signal configuration or transmission method leads to low CSI measurement efficiency.

In a first aspect, a reference signal configuration method is in an embodiment of the present disclosure, applied to a network-side device, including:

configuring at least one group of reference signal resources, each group of reference signal resources including at least two reference signals.

Optionally, a first reference signal and a second reference signal are any two reference signals of the at least two reference signals;

> frequency domain resources occupied by the first reference signal are at least a part of frequency domain resources occupied by the second reference signal; and/or,
> time domain resources occupied by the first reference signal and time domain resources occupied by the second reference signal are different; and/or,
> each first port of the first reference signal corresponds to at least one second port of the second reference signal, and each second port corresponds to one first port.

Optionally, the frequency domain resources occupied by the first reference signal and the frequency domain resources occupied by the second reference signal are the same.

Optionally, the first reference signal is configured with a first periodicity and a first slot offset, the second reference signal is configured with a second periodicity and a second slot offset, the first slot offset is smaller than the first periodicity, and the second slot offset is smaller than the second periodicity.

Optionally, the first periodicity and the second periodicity are the same, and the first slot offset and the second slot offset are different;

or,

the first periodicity is the same as the second periodicity, the first slot offset is the same as the second slot offset, and the first reference signal and the second reference signal occupy different time domain resources.

Optionally, the at least two reference signals include a channel state information reference signal.

Optionally, the method further includes:

sending the at least two reference signals to a terminal device.

Optionally, the method further includes:

receiving channel state information reported by the terminal device.

Optionally, the channel state information includes Doppler information.

Optionally, the Doppler information includes at least one of the following: a Doppler spectrum, a Doppler frequency offset, and a power delay spectrum.

In a second aspect, a method for reporting state information is further in an embodiment of the present disclosure, applied to a terminal device, including:

receiving at least two reference signals;
sending channel state information.

Optionally, the channel state information includes Doppler information.

Optionally, the Doppler information includes at least one of the following: a Doppler spectrum, a Doppler frequency offset, and a power delay spectrum.

Optionally, the channel state information includes at least a set of values, and the set of values includes at least a delay and a power corresponding to the delay.

Optionally, the first reference signal and the second reference signal are any two reference signals of the at least two reference signals;

frequency domain resources occupied by the first reference signal are at least a part of frequency domain resources occupied by the second reference signal; and/or,
time domain resources occupied by the first reference signal and time domain resources occupied by the second reference signal are different; and/or,
each first port of the first reference signal corresponds to at least one second port of the second reference signal, and each second port corresponds to one first port.

Optionally, the frequency domain resources occupied by the first reference signal and the frequency domain resources occupied by the second reference signal are the same.

Optionally, the first reference signal is configured with a first periodicity and a first slot offset, the second reference signal is configured with a second periodicity and a second slot offset, the first slot offset is smaller than the first periodicity, and the second slot offset is smaller than the second periodicity.

Optionally, the first periodicity and the second periodicity are the same, and the first slot offset and the second slot offset are different;
or,
the first periodicity is the same as the second periodicity, the first slot offset is the same as the second slot offset, and the first reference signal and the second reference signal occupy different time domain resources.

Optionally, the at least two reference signals include a channel state information reference signal.

Optionally, the channel state information includes a first vector and a first coefficient.

Optionally, a dimension of the first vector is $N$, and $N$ is a positive integer;

or, a dimension $N$ of the first vector satisfies:

$$\mathrm{N} = N_{Brust} \times R_{Brust};$$

where, $N_{Brust}$ is a positive integer, $R_{Brust}$ is a positive integer.

Optionally, a number of the first vectors is $J$, and $J$ is a positive integer;

or, a number $J$ of the first vectors satisfies:

$$\mathrm{J} = P_t N_{Brust};$$

where $P_t$ is a positive integer.

Optionally, the channel state information is configured to determine a codebook, where the codebook $W^l$ of the $l$-th layer satisfies:

$$W^l = \begin{bmatrix} \sum_{i=0}^{L-1} v_i p_{l,0}^{(1)} \sum_{t=0}^{M_t-1} y_l^{(t)} p_{l,i,f}^{(2)} \varphi_{l,i,f} \\ \sum_{i=0}^{L-1} v_i p_{l,1}^{(1)} \sum_{t=0}^{M_t-1} y_l^{(t)} p_{l,i+L,f}^{(2)} \varphi_{l,i+L,f} \end{bmatrix};$$

where $v_i$ represents the $i$-th second vector, $p_{l,0}^{(1)}$ represents a reference amplitude in a first polarization direction, $p_{l,1}^{(1)}$ represents a reference amplitude in a second polarization direction; $y_l^{(t)}$ represents the $t$-th first vector of the $l$-th layer; $p_{l,i,t}^{(2)}$ represents an amplitude corresponding to the $t$-th first vector on the $i$-th second vector in the first polarization direction of the $l$-th layer; $\varphi_{l,i,t}$ represents a phase corresponding to the $t$-th first vector on the $i$-th second vector in the first polarization direction of the $l$-th layer; $p_{l,i+L,t}^{(2)}$ represents an amplitude corresponding to the $t$-th first vector on the $i$-th second vector in the second polarization direction of the $l$-th layer; $\varphi_{l,i+L,t}$ represents a phase corresponding to the $t$-th first vector on the $i$- th second vector in the second polarization direction of the $l$-th layer, $t$ is a positive integer greater than or equal to 0 and less than $J$; $i$ is a positive integer greater than or equal to 0 and less than $L$, $L$ is a positive integer; $l$ is a positive integer greater than 0 and less than or equal to v, v is a positive integer.

Optionally, the first coefficient includes the reference amplitude, the amplitude and the phase.

In a third aspect, a network-side device is further in an embodiment of the present disclosure, including: a configuring module, configured to configure at least one group of reference signal resources, each group of reference signal resources including at least two reference signals.

In a fourth aspect, a terminal device is further in an embodiment of the present disclosure, including:

a first receiving module, configured to receive at least two reference signals;
a first sending module, configured to send channel state information.

In a fifth aspect, a network-side device is further in an embodiment of the present disclosure, including: a transceiver, a memory, a processor, and a computer program stored in the memory and executable on the processor; where
the processor is configured to read the program in the memory to perform the method in the first aspect.

In a sixth aspect, a terminal device is further in an embodiment of the present disclosure, including: a transceiver, a memory, a processor, and a computer program stored in the memory and executable on the processor; where
the processor is configured to read the program in the memory to perform the method in the second aspect.

In a seventh aspect, a readable storage medium, is further in an embodiment of the present disclosure, for storing a program, where when the program is executed by a processor to perform the method according to any one of claims 1 to 10, or perform the method in the first aspect or the second aspect.

The reference signal configuration method provided by the embodiment of the present disclosure is applied to a network-side device, including configuring at least one group of reference signal resources, each group of reference signal resources including at least two reference signals. Through the above settings, the network-side device can configure at least two reference signals, so that the terminal device can measure the channel state information within a periodicity of time based on the two reference signals, thereby improving the efficiency of the channel state information measurement, reducing the number of times the reference signal is sent and the number of times the reported state information is received, reducing the resource overhead of the reference signal, and at the same time providing the possibility of improving the accuracy of the state information feedback based on the reference signal.

## BRIEF DESCRIPTION OF THE DRAWINGS

In order to more clearly illustrate the technical solutions of the embodiments of the present disclosure, the drawings required for use in the description of the embodiments of the present disclosure will be briefly introduced below. Obviously, the drawings described below are only some embodiments of the present disclosure. For ordinary technicians in this field, other drawings can be obtained based on these drawings without creative work.

FIG. 1 is a block diagram of a wireless communication system to which an embodiment of the present application can be applied;
FIG. 2 is a flow chart of a reference signal configuration method in an embodiment of the present disclosure;
FIG. 3 is a flow chart of a method for reporting state information in an embodiment of the present disclosure;
FIG. 4 is a flowchart of interaction between a network-side device and a terminal device in an embodiment of the present disclosure;

FIG. 5 is a first structural diagrams of the network-side device in an embodiment of the present disclosure;

FIG. 6 is a first structural diagram of a terminal device in an embodiment of the present disclosure;

FIG. 7 is a second structural diagram of a network-side device in an embodiment of the present disclosure; and

FIG. 8 is a second structural diagram of a terminal device in an embodiment of the present disclosure.

## DETAILED DESCRIPTION

The following will be combined with the drawings in the embodiments of the present application to clearly and completely describe the technical solutions in the embodiments of the present application. Obviously, the described embodiments are part of the embodiments of the present application, not all of the embodiments. Based on the embodiments in the present application, all other embodiments obtained by ordinary technicians in this field belong to the scope of protection of this application.

The terms "first", "second", etc. in the specification and claims of the present application are used to distinguish similar objects, and are not used to describe a specific order or sequence. It should be understood that the terms used in this way are interchangeable where appropriate, so that the embodiments of the present application can be implemented in an order other than those illustrated or described herein, and the objects distinguished by "first" and "second" are generally of the same type, and the number of objects is not limited, for example, the first object can be one or more. In addition, "and/or" in the specification and claims represents at least one of the connected objects, and the character "/" generally represents that the objects associated with each other are in an "or" relationship.

It is worth noting that the technology described in the embodiments of the present application is not limited to the Long Term Evolution (LTE)/LTE-Advanced (LTE-A) system, but can also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA) and other systems. The terms "system" and "network" in the embodiments of the present application are often used interchangeably, and the described technology can be used for the above-mentioned systems and radio technologies as well as other systems and radio technologies. The following description describes a New Radio (NR) system for example purposes, and NR terms are used in most of the following descriptions, but these technologies can also be applied to applications other than NR system applications, such as the 6th Generation (6G) communication system.

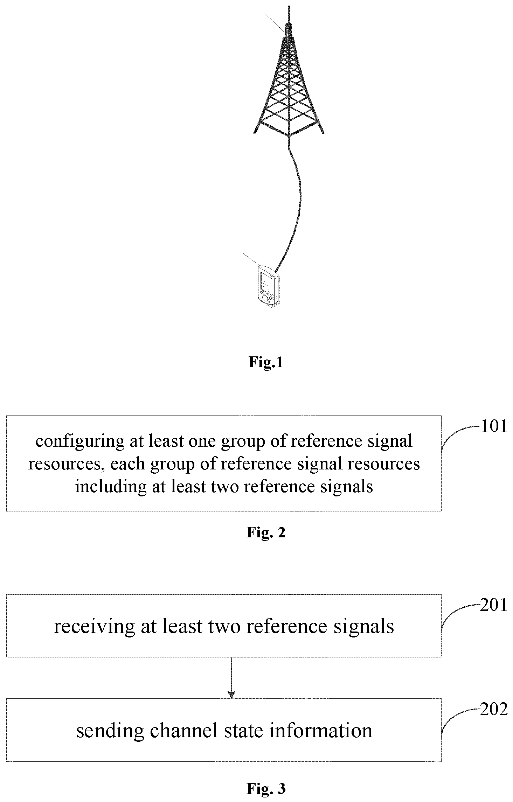

FIG. 1 shows a block diagram of a wireless communication system applicable to an embodiment of the present application. The wireless communication system includes a terminal 11 and a network-side device 12. The terminal 11 may also be referred to as a terminal device or a user terminal (User Equipment, UE). The terminal 11 may be a mobile phone, a tablet computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device) or a vehicle-mounted device (VUE), a pedestrian terminal (Pedestrian User Equipment, PUE) and other terminal side devices, and the wearable device includes: a bracelet, a headset, glasses, etc. It should be noted that the specific type of the terminal 11 is not limited in the embodiment of the present application. The network-side device 12 can be a base station or a core network device, where the base station can be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved B node (Evolved Node B, eNB), a home B node, a home evolved B node, a wireless local area network (Wireless Local Area Network, WLAN) access point, a wireless fidelity (Wireless Fidelity, WiFi) node, a transmitting and receiving point (Transmitting Receiving Point, TRP) or some other suitable term in the field. As long as the same technical effect is achieved, the base station is not limited to a specific technical vocabulary. It should be noted that in the embodiment of the present application, only the base station in the NR system is taken as an example, but the specific type of the base station is not limited. The core network equipment may be referred to as a Location Management Function (LMF), an Enhanced Serving Mobile Location Center (E-SMLC), a location server, or some other appropriate term in the art.

Referring to FIG. 2, FIG. 2 is one of the flow charts of the reference signal configuration method provided by the embodiment of the present disclosure. As shown in FIG. 2, the embodiment of the present disclosure provides a reference signal configuration method, which is applied to a network-side device, and the method specifically includes the following steps:

Step 101: configuring at least one group of reference signal resources, each group of reference signal resources including at least two reference signals.

It should be understood that the specific type of the reference signal is not limited here. In this embodiment, the reference information may refer to a known signal provided by the transmitter to the receiver for channel estimation or channel detection. The reference signal may be an uplink reference signal or a downlink reference signal. For example, in some embodiments, the reference signal may be a Channel State Information Reference Signal (CSI-RS). In other embodiments, the reference signal may be a Multicast Broadcast Single Frequency Network Reference Signal (MBSFN-RS). In other embodiments, the reference signal may be a dedicated demodulation reference signals (DM-RS).

It should be understood that, in some embodiments, the method specifically includes the following steps: configuring a group of reference signal resources, the group of reference signal resources including at least two reference signals. In this embodiment, it can be understood that the method specifically includes configuring at least two reference signals, and any two reference signals of the at least two reference signals can be considered as a matching reference signal pair.

In some other embodiments, the method specifically includes the following steps: configuring multiple groups of reference signal resources, each group of reference signal resources including at least two reference signals. In this embodiment, any two reference signals belonging to the same group can be considered as a matching reference signal pair.

In a specific implementation, each matching reference signal pair configured by the network-side device can be used to enable the terminal device to obtain a state information based on its measurement.

In some embodiments, configuring at least one group of reference signal resources (resource), each group of reference signal resources including at least two reference signals can be understood as configuring at least one reference signal resource set, where each reference signal resource set includes 1 group of reference signal resources, and the group of reference signals includes at least two reference signals.

In some other embodiments, configuring at least one group of reference signal resources, each group of reference signal resources including at least two reference signals can be understood as configuring one reference signal resource set and dividing it into at least one group, the reference signal resources in each group are regarded as one group of reference signal resources, and each group of reference signals includes at least two reference signals.

Compared with the method in which the base station configures a single reference signal and enables the UE to obtain the CSI corresponding to a certain moment based on a single reference measurement, in the above scheme, the network-side device configures at least two reference signals so that the terminal can measure the channel state information within a periodicity of time based on the two reference signals, thereby improving the efficiency of channel state information measurement, reducing the number of times the reference signal is sent and the number of times the reported state information is received, reducing the resource overhead of the reference signal, and at the same time providing the possibility of improving the accuracy of the reference signal state information feedback.

Optionally, in some embodiments, the first reference signal and the second reference signal are any two reference signals of the at least two reference signals;

the frequency domain resources occupied by the first reference signal are at least a part of the frequency domain resources occupied by the second reference signal; and/or,
the time domain resources occupied by the first reference signal and the time domain resources occupied by the second reference signal are different; and/or,
each first port of the first reference signal corresponds to at least one second port of the second reference signal, and each second port corresponds to one first port.

It should be understood that configuring at least one group of reference signal resources may be understood as configuring at least one of the following of the first reference signal and the second reference signal in the at least one group of reference signal resources: port information of time domain information and port information of frequency domain information.

It should be understood that the frequency domain configuration of the first reference signal and the second reference signal satisfies the following content: the frequency domain resources occupied by the first reference signal are at least a part of the frequency domain resources occupied by the second reference signal.

It should be understood that the frequency domain resources occupied by the first reference signal are at least a part of the frequency domain resources occupied by the second reference signal. It can be understood that the frequency domain resources occupied by the first reference signal are a part of the frequency domain resources occupied by the second reference signal, or the frequency domain resources occupied by the first reference signal are the same as the frequency domain resources occupied by the second reference signal.

Optionally, in some embodiments, the frequency domain resources occupied by the first reference signal are the same as the frequency domain resources occupied by the second reference signal. Through the above setting, since the frequency domain resources occupied by the first reference signal are the same as the frequency domain resources occupied by the second reference signal, the frequency domain resources occupied by the reference signal resources can be reduced.

It should be understood that the time domain configuration of the first reference signal and the second reference signal satisfies the following content: the time domain resources occupied by the first reference signal are different from the time domain resources occupied by the second reference signal.

It should be understood that the time domain resources occupied by the first reference signal and the time domain resources occupied by the second reference signal are different, which can be understood as the time domain resources occupied by the first reference signal and the time domain resources occupied by the second reference signal are different slots, or the time domain resources occupied by the first reference signal and the time domain resources occupied by the second reference signal are different symbols in the same slot.

It should be understood that the port configuration of the first reference signal and the second reference signal satisfies the following: each first port of the first reference signal corresponds to at least one second port of the second reference signal, and each second port corresponds to one first port.

It should be understood that, when the number of first ports is equal to the number of second ports, the first ports correspond to the second ports one by one. When the number of first ports is greater than the number of second ports, each of the first ports corresponds to at least one of the second ports, and each of the second ports corresponds to one of the first ports. When the number of first ports is less than the number of second ports, each of the second ports corresponds to at least one of the first ports, and each of the first ports corresponds to one of the second ports.

For ease of understanding, an example is given below. For example, in some embodiments, the number of the first ports is 2, respectively recorded as port #10 and port #11, and the number of the second ports is 4, respectively recorded as port #20, port #21, port #22, and port #23. Then port #10 may correspond to 1 to 3 ports among port #20, port #21, port #22, and port #23, and port #11 may correspond to the remaining 1 to 3 ports.

For example, when port #10 corresponds to port #20 and port #21, port #11 corresponds to port #22 and port #23. When port #10 corresponds to port #21, port #11 corresponds to port #20, port #22 and port #23.

Optionally, in some embodiments, the first reference signal is configured with a first periodicity and a first slot offset, the second reference signal is configured with a second periodicity and a second slot offset, the first slot offset is smaller than the first periodicity, and the second slot offset is smaller than the second periodicity.

It should be understood that, when the first slot offset is greater than or equal to the first periodicity, the number of times the first reference signal is sent will be less than the number of times the first reference signal is sent when the first slot offset is less than the first periodicity. Similarly, when the second slot offset is greater than or equal to the second periodicity, the number of times the second reference signal is sent will be less than the number of times the second reference signal is sent when the second slot offset is less than the second periodicity.

For ease of understanding, an example is given below. Taking the first periodicity and the first slot offset as an example, the first periodicity is recorded as $T_1$, and the first slot offset is recorded as $s_1$. Then, the times of sending the first reference signal are $s_1$, $T_1+s_1$, $2*T_1+s_1$, $3*T_1+s_1$... $N*T_1+s_1$. In the case of $s_1 <T_1$, the number of times the first reference signal is sent is recorded as N. In the case of $T_1 \leq si <2*T_1$, the first reference signal will not be sent before the time $T_1$, and the number of times the first reference signal is sent is N-1. In the case of $2*T_1 \leq s_1 <3*T_1$, the first reference signal will not be sent before the time $2*T_1$, and the number of times the first reference signal is sent is N-2, and so on. No further details are given here.

In an embodiment of the present disclosure, the first slot offset is smaller than the first periodicity, and the second slot offset is smaller than the second periodicity. Through the above settings, the first reference signal and the second reference signal can be sent more times in the time domain, thereby improving the quality of the first reference signal and the second reference signal.

Optionally, in some embodiments, the first periodicity and the second periodicity are the same, and the first slot offset and the second slot offset are different;

or,

the first periodicity is the same as the second periodicity, the first slot offset is the same as the second slot offset, and the first reference signal and the second reference signal occupy different time domain resources.

It should be understood that, in some embodiments, the first periodicity is the same as the second periodicity, and the first slot offset is different from the second slot offset. Through the above settings, the first reference signal and the second reference signal sent in the same periodicity are in different slots in the time domain.

It should be understood that, in some other embodiments, the first periodicity is the same as the second periodicity, the first slot offset is the same as the second slot offset, and the first reference signal and the second reference signal occupy different time domain resources. Through the above settings, the first reference signal and the second reference signal sent in the same periodicity can be in different symbols of the same slot in the time domain.

It should be noted that the correspondence between the first periodicity and the second periodicity, and the correspondence between the first slot offset and the second slot offset is not limited to the case exemplified in the above embodiment. In a specific implementation, under the correspondence between the first periodicity and the second periodicity, and the correspondence between the first slot offset and the second slot offset, the first reference signal and the second reference signal sent in the same periodicity do not overlap in the time domain and the symbol interval is less than a preset value, then the correspondence is within the scope of the present disclosure.

Optionally, in some embodiments, the at least two reference signals include a channel state information reference signal.

In this embodiment, the at least two reference signals include CSI-RS. In some embodiments, the CSI-RS can be understood as being modified based on the CSI-RS configured by default in the relevant technology. In this embodiment, since the CSI-RS is modified based on the CSI-RS configured by default in the relevant technology, the convenience of configuring the reference signal resource is improved.

In other embodiments, the CSI-RS may be understood as a custom configured reference signal for channel measurement. In this embodiment, since the CSI-RS is a custom configured reference signal for channel measurement, the flexibility of configuring the reference signal resource is improved.

It should be understood that, in a specific implementation, the at least two reference signals may include a CSI-RS modified based on a CSI-RS configured by default in the related art, and/or a custom-configured reference signal for channel measurement.

Optionally, in some embodiments, the method further includes:
sending the at least two reference signals to the terminal device.

In this embodiment, the at least two reference signals sent by the network-side device to the terminal device are at least two reference signals included in at least one group of reference signal resources configured in step 101. In some embodiments, after step 101, the method further includes sending the at least two reference signals to the terminal device.

The terminal device may receive the at least two reference signals sent by the network-side device. Then, the terminal device may measure the channel based on the at least two reference signals to obtain channel state information.

It should be understood that, in one case, the at least two reference signals may be at least two reference signals included in the same group of reference signal resources. In another case, the at least two reference signals may also be at least two reference signals included in multiple groups of reference signal resources, where, in this case, the at least two reference signals include at least a first reference signal and a second reference signal belonging to the same group of reference signal resources.

It should be understood that, when the at least two reference signals are at least two reference signals included in multiple groups of reference signal resources, the at least two reference signals can also be understood as multiple pairs of reference signals, each pair of reference signals includes a first reference signal and a second reference signal belonging to the same group of reference signal resources.

In this case, the terminal device may calculate a channel state sub-information based on each pair of reference signals, and then obtain the final channel state information based on multiple channel state sub-information. The specific manner in which the terminal device obtains the final channel state information based on multiple channel state sub-information is not limited here.

For example, in some embodiments, the terminal device determines an average value of a plurality of channel state sub-information as the channel state information. In other embodiments, the terminal device determines a median value of a plurality of channel state sub-information as the channel state information.

Optionally, in some embodiments, the method further includes:
receiving channel state information reported by the terminal device.

After obtaining the channel state information through measurement, the terminal device reports the channel state information to the network-side device. The network-side device receives the channel state information reported by the terminal device.

In some embodiments, after receiving the channel state information reported by the terminal device, the network-side device determines scheduling information and a codebook based on the channel state information prediction, and performs scheduling and other related processing on the terminal device according to the determined codebook. In some embodiments, the codebook may also be referred to as a precoding matrix.

Specifically, after receiving the channel state information reported by the terminal device, the network-side device calculates and predicts the scheduling information and precoding matrix within the future target time length according to the channel state information reported by the terminal device.

After the network-side device calculates and predicts the scheduling information and precoding matrix within the future target time length, the network-side device may not send the at least two reference signals to the terminal device within the target time length. Therefore, the terminal device may not report the channel state information within the target time length.

Optionally, in some embodiments, the channel state information includes Doppler information.

It should be understood that the specific content of the Doppler information is not limited herein. Optionally, in some embodiments, the Doppler information includes at least one of the following: a Doppler spectrum, a Doppler frequency offset, and a power delay spectrum.

It should be understood that the Doppler information can be understood as determined by the terminal device based on the at least two reference signals sent by the network-side device. The specific manner in which the terminal device determines the Doppler information based on the at least two reference signals sent by the network-side device is not limited here.

It should be understood that, in some embodiments, the channel state information is determined by the terminal device based on the at least two reference signals sent by the network-side device. The specific manner in which the terminal device determines the channel state information based on the at least two reference signals sent by the network-side device is not limited herein.

It should be understood that the channel state information includes Doppler information, and the specific method for the terminal device to report the channel state information is not limited here. In some embodiments, the terminal device reports the channel state information to the network-side device, and the channel state information carries the Doppler information.

It should be understood that, in some embodiments, the channel state information is CSI, and generally, CSI includes at least one of the following: Channel Quality Indicator (CQI), Precoding Matrix Indicator (PMI), Precoding Type Indicator (PTI) and Rank Indication (RI). In one case, the CSI includes at least one of the following: CQI, PMI, PTI, RI and Doppler information. In another case, Doppler information can be reported as part of PMI.

The reference signal configuration method provided by the embodiment of the present disclosure is applied to a network-side device, including configuring at least one group of reference signal resources, each group of reference signal resources including at least two reference signals. Through the above settings, the network-side device can configure at least two reference signals, so that the terminal device can measure the channel state information within a periodicity of time based on the two reference signals, improve the efficiency of the channel state information measurement, and then reduce the number of times the reference signal is sent and the number of times the reported state information is received, thereby reducing the resource overhead of the reference signal, and at the same time providing the possibility of improving the accuracy of the state information feedback based on the reference signal.

A method for reporting state information is provided in an embodiment of the present disclosure, as shown in FIG. 3, the method includes the following steps:

Step 201: receiving at least two reference signals.
Step 202: sending channel state information.

It should be understood that this embodiment is an implementation on the terminal device side corresponding to the embodiment shown in FIG. 2. Its specific implementation can refer to the relevant introduction in the embodiment shown in FIG. 2. To avoid repetition, it will not be described again here.

The method for reporting state information provided by the embodiment of the present disclosure is applied to a terminal device, and includes receiving at least two reference signals and sending channel state information. Through the above settings, the network-side device can configure at least two reference signals, so that the terminal device can measure the channel state information within a periodicity of time based on the two reference signals, thereby improving the efficiency of channel state information measurement, reducing the number of times the reference signal is sent and the number of times the reported state information is received, reducing the resource overhead of the reference signal, and at the same time providing the possibility of improving the accuracy of state information feedback based on the reference signal.

Optionally, in some embodiments, the channel state information includes Doppler information.

Optionally, in some embodiments, the Doppler information includes at least one of the following: a Doppler spectrum, a Doppler frequency offset, and a power delay spectrum.

Optionally, in some embodiments, the channel state information includes at least a set of values, and the set of values includes at least a delay and a power corresponding to the delay.

It should be understood that the power corresponding to the delay can be understood as the expected power of the received signal at a certain delay after the transmitted signal passes through the channel. The channel state information includes at least one set of data, each set of data includes a delay and the power corresponding to the delay.

Optionally, the first reference signal and the second reference signal are any two reference signals of the at least two reference signals;

the frequency domain resources occupied by the first reference signal are at least a part of the frequency domain resources occupied by the second reference signal; and/or,
the time domain resources occupied by the first reference signal and the time domain resources occupied by the second reference signal are different; and/or,
each first port of the first reference signal corresponds to at least one second port of the second reference signal, and each second port corresponds to one first port.

Optionally, the frequency domain resources occupied by the first reference signal and the frequency domain resources occupied by the second reference signal are the same.

Optionally, the first reference signal is configured with a first periodicity and a first slot offset, the second reference signal is configured with a second periodicity and a second slot offset, the first slot offset is smaller than the first periodicity, and the second slot offset is smaller than the second periodicity.

Optionally, the first periodicity and the second periodicity are the same, and the first slot offset and the second slot offset are different;

or,

the first periodicity is the same as the second periodicity, the first slot offset is the same as the second slot offset, and the first reference signal and the second reference signal occupy different time domain resources.

Optionally, the at least two reference signals include a channel state information reference signal.

It should be understood that this embodiment is an implementation on the terminal device side corresponding to the embodiment shown in FIG. 2. Its specific implementation can refer to the relevant introduction in the embodiment shown in FIG. 2. To avoid repetition, it will not be described again here.

Optionally, in some embodiments, the channel state information includes a first vector and a first coefficient.

It should be understood that the channel state information includes a first vector and a first coefficient, and the first vector and the first coefficient can be used to characterize the channel state information. The specific contents of the first vector and the first coefficient are not limited here.

For example, in some embodiments, the first vector may be understood as

a vector in the Doppler domain. The first coefficient may be understood as a channel correlation coefficient. In this embodiment, based on the vector in the Doppler domain and the channel correlation coefficient, the corresponding channel state information may be described in the Doppler domain.

In this embodiment, the terminal device reporting the channel state information to the network-side device can be understood as the terminal device reporting the first vector and the first coefficient to the network-side device. The specific method of the terminal device reporting the first vector and the first coefficient to the network-side device is not limited here.

It should be understood that, in some embodiments, when the first vector can be understood as a vector in the Doppler domain, and when the first coefficient can be understood as a channel correlation coefficient, the specific process of the terminal device reporting the CSI to the network-side device can be understood as follows:

The terminal device assumes that the spatial domain vectors used at different times are consistent, based on the Type II codebook or the enhanced Type II codebook. The terminal device selects multiple Doppler domain vectors to construct a Doppler subspace, and calculates the channel correlation coefficient of the downlink channel in this Doppler subspace. Finally, the terminal device reports the multiple Doppler domain vectors and the channel correlation coefficients under the multiple Doppler domain vectors as part of the PMI to the network-side device. The number and dimension of the Doppler domain vectors are not limited here.

Optionally, in some embodiments, the dimension of the first vector is $N$, where $N$ is a positive integer;

Alternatively, the dimension $N$ of the first vector satisfies:

$$\mathrm{N} = N_{Brust} \times R_{Brust};$$

where, $N_{Brust}$ is a positive integer, $R_{Brust}$ is a positive integer.

It should be understood that the dimension of the first vector is a positive integer. In one case, the dimension of the first vector can be any positive integer configured by high-layer signaling. In another case, the dimension of the first vector can be calculated.

It should be understood that after receiving the channel state information reported by the terminal device, the network-side device will calculate and predict the scheduling information and precoding matrix within the future target time length based on the channel state information reported by the terminal device.

It should be understood that, $N_{Brust}$ is a positive integer, $R_{Brust}$ is a positive integer. In some embodiments, $N_{Brust}$ and $R_{Brust}$ are configured by high-level signaling. The specific values of $N_{Brust}$ and $R_{Brust}$ are not limited here. In some embodiments, $N_{Brust}$ can be determined based on the above-mentioned target time length.

Optionally, in some embodiments, the number of the first vectors is $J$, where $J$ is a positive integer;

Alternatively, the number $J$ of the first vectors satisfies:

$$\mathrm{J} = P_t N_{Brust};$$

where $P_t$ is a positive integer.

It should be understood that the number of the first vectors is a positive integer. In one case, the number of the first vectors can be any positive integer configured by high-layer signaling. In another case, the number of the first vectors can be calculated.

It should be understood that, $P_t$ is a positive integer. In some embodiments, the specific value of $P_t$ is not limited here. In some embodiments, $P_t$ can be determined based on the above-mentioned target time length.

Optionally, in some embodiments, the channel state information is configured to determine a codebook, where the codebook $W^l$ of the $l$-th layer satisfies:

$$W^l = \begin{bmatrix} \sum_{i=0}^{L-1} v_i p_{l,0}^{(1)} \sum_{t=0}^{M_t-1} y_l^{(t)} p_{l,i,f}^{(2)} \varphi_{l,i,f} \\ \sum_{i=0}^{L-1} v_i p_{l,1}^{(1)} \sum_{t=0}^{M_t-1} y_l^{(t)} p_{l,i+L,f}^{(2)} \varphi_{l,i+L,f} \end{bmatrix};$$

where $v_i$ represents the $i$-th second vector, $p_{l,0}^{(1)}$ represents a reference amplitude in a first polarization direction, $p_{l,1}^{(1)}$ represents a reference amplitude in a second polarization direction; $y_l^{(t)}$ represents the $t$-th first vector of the $l$-th layer; $p_{l,i,t}^{(2)}$ represents an amplitude corresponding to the $t$-th first vector on the $i$-th second vector in the first polarization direction of the $l$-th layer; $\varphi_{l,i,t}$ represents a phase corresponding to the $t$-th first vector on the $i$-th second vector in the first polarization direction of the $l$-th layer; $p_{l,i+L,t}^{(2)}$ represents an amplitude corresponding to the $t$-th first vector on the $i$-th second vector in the second polarization direction of the $l$-th layer; $\varphi_{l,i+L,t}$ represents a phase corresponding to the $t$-th first vector on the $i$- th second vector in the second polarization direction of the $l$-th layer, $t$ is a positive integer greater than or equal to 0 and less than $J$; $i$ is a positive integer greater than or equal to 0 and less than $L$, $L$ is a positive integer; $l$ is a positive integer greater than 0 and less than or equal to $v$, $v$ is a positive integer.

It should be understood that, in some embodiments, $L$ is configured by a high-level parameter, $v$ is reported by the terminal device, that is, the channel state information includes $v$.

It should be understood that the channel state information is used to determine the codebook, which can be understood as the network-side device determining the codebook within the future target time length based on the channel state information. The codebooks on different layers of data transmission are also different.

For ease of understanding, a specific embodiment is taken as an example below to lillustrate the specific process of determining the codebook $W^l$ of the $l$-th layer based on the channel state information.

In this embodiment, it is simply assumed that the spatial vectors $v_i$ used at different times are consistent and basically similar to the Type II codebook. Then, on each layer, the codebook W at $N$ times satisfies:

$$W = \begin{bmatrix} \sum_{i=0}^{L-1} v_i p_{0,0,i} \varphi_{0,0,i} & \sum_{i=0}^{L-1} v_i p_{1,0,i} \varphi_{1,0,i} & \cdots & \sum_{i=0}^{L-1} v_i p_{N_4,0,i} \varphi_{N_4,0,i} \\ \sum_{i=0}^{L-1} v_i p_{0,1,i} \varphi_{0,1,i} & \sum_{i=0}^{L-1} v_i p_{1,1,i+L} \varphi_{1,1,i} & & \sum_{i=0}^{L-1} v_i p_{N_4,1,i} \varphi_{N_4,1,i} \end{bmatrix}$$

$$= \begin{bmatrix} v_0 & v_1 & \cdots & v_{L-1} & 0 & 0 & 0 & 0 \\ 0 & 0 & 0 & 0 & v_0 & v_1 & \cdots & v_{L-1} \end{bmatrix} \begin{bmatrix} p_{0,0,0}\varphi_{0,0,0} & p_{1,0,0}\varphi_{1,0,0} & \cdots & p_{N_4,0,0}\varphi_{N_4,0,0} \\ \cdots & \cdots & \cdots & \cdots \\ p_{0,0,L-1}\varphi_{0,0,L-1} & p_{1,0,L-1}\varphi_{1,0,L-1} & \cdots & p_{N_4,0,L-1}\varphi_{N_4,0,L-1} \\ p_{0,1,0}\varphi_{0,1,0} & p_{1,1,0}\varphi_{1,1,0} & \cdots & p_{N_4,1,0}\varphi_{N_4,1,0} \\ \cdots & \cdots & \cdots & \cdots \\ p_{0,1,L-1}\varphi_{0,1,L-1} & p_{1,1,L-1}\varphi_{1,1,L-1} & \cdots & p_{N_4,1,L-1}\varphi_{N_4,1,L-1} \end{bmatrix}$$

$$= W_1 \cdot W_2 (2N_1 N_2 \times 2L; 2L \times N_4)$$

The UE reports $L$ spatial vectors, $v_i$ indicates the $i$-th spatial vector ($i \in \{0,..., L-1\}$); $p_{j,0,i}$ indicates the amplitude value of the i-th spatial vector in the first polarization direction at the j-th moment (burst) ($j \in \{0,..., N-1\}$), $p_{j,1,i}$ indicating the amplitude value of the i-th spatial vector in the second polarization direction on the j-th burst (j $\in$ {0,..., N-1}); $\varphi_{j,0,i}$ indicating the phase value of the i-th spatial vector in the first polarization direction on the j-th burst, $\varphi_{j,1,i}$ indicating the phase value of the i-th spatial vector in the second polarization direction on the j-th burst, i is a positive integer greater than or equal to 0 and less than L, L is a positive integer; I is a positive integer greater than 0 and less than or equal to v, v is a positive integer.

After considering the quantization and compression of the Doppler domain, W can be expressed as:

$$W = W_1 \cdot W_2(2N_1N_2 \times 2L; 2L \times N) = W_1 \cdot W_2 \cdot W_f^H.$$

The dimension of $W$ is $2N_1N_2 \times N$, $W$ is used to represent the precoding of $N$ bursts at a certain layer. The dimension of $W_1$ is $2N_1N_2 \times 2L$, $W_1$ is used to represent $L$ spatial vectors; the dimension of $W_2$ is $2L \times J$, $W_2$ is used to represent the coefficient matrix; the dimension of $W_f^H$ is $N \times J$, $W_f^H$ is used to represent J Doppler domain vectors.

N = $N_{Brust} \times R_{Brust}$, $N_{Brust}$ is used to indicate the number of time moments, $R_{Brust} \geq 1$, $R_{Brust}$ is configured by high-level signaling; J = $P_t N_{Brust}$, J is used to indicate the number of Doppler domain vectors of each layer. $P_t \leq 1$.

Then the compressed codebook $W^l$ in the *l-th* layer satisfies:

$$W^l = \begin{bmatrix} \sum_{i=0}^{L-1} v_i p_{l,0}^{(1)} \sum_{t=0}^{M_t-1} y_l^{(t)} p_{l,i,f}^{(2)} \varphi_{l,i,f} \\ \sum_{i=0}^{L-1} v_i p_{l,1}^{(1)} \sum_{t=0}^{M_t-1} y_l^{(t)} p_{l,i+L,f}^{(2)} \varphi_{l,i+L,f} \end{bmatrix}$$

$v_i$ represents the *i-th* second vector, $p_{l,0}^{(1)}$ represents the reference amplitude in the first polarization direction, $p_{l,1}^{(1)}$ represents the reference amplitude in the second polarization direction; $y_l^{(t)}$ represents the *t-th* first vector of the *l-th* layer; $p_{l,i,t}^{(2)}$ represents the amplitude corresponding to the *t-th* first vector on the *i-th* second vector in the first polarization direction of the *l-th* layer; $\varphi_{l,i,t}$ represents a phase corresponding to the *t-th* first vector on the *i-th* second vector in the first polarization direction of the *l-th* layer; $p_{l,i+L,t}^{(2)}$ represents the amplitude corresponding to the *t-th* first vector on the *i-th* second vector in the second polarization direction of the layer; $\varphi_{l,i+L,t}$ represents the phase corresponding to the *t-th* first vector on the *i-th* second vector in the second polarization direction of the *l-th* layer, and *t* is a positive integer greater than or equal to 0 and less than *J*.

Optionally, in some embodiments, the first coefficient includes the reference amplitude, the amplitude and the phase.

It should be understood that the reference amplitude can be understood as $p_{l,0}^{(1)}$ and $p_{l,1}^{(1)}$. The amplitude can be understood as $p_{l,i,t}^{(2)}$ and $p_{l,i+L,t}^{(2)}$, and the phase can be understood as $\varphi_{l,i,t}$ and $\varphi_{l,i+L,t}$.

It should be understood that the first coefficients include $p_{l,0}^{(1)}$, $p_{l,1}^{(1)}$, $p_{l,i,t}^{(2)}$, $p_{l,i+L,t}^{(2)}$, $\varphi_{l,i,t}$ and $\varphi_{l,i+L,t}$. The first vectors include, therefore, $y_l^{(t)}$ the codebook of the *l-th* layer can be determined based on the first vectors and the first coefficients reported by the terminal device.

For ease of understanding, a specific embodiment will be used as an example to illustrate the specific process of the reference signal configuration method and the state information reporting method in an embodiment of the present disclosure. For ease of description, in the subsequent embodiments, the reference signal will be described as CSI-RS.

The network-side device configures at least one group of CSI-RS resources (CSI-RS resource), where each group of CSI-RS resources includes at least two CSI-RSs. In this embodiment, two groups of CSI-RS resources are configured, and each group of CSI-RS resources includes two CSI-RSs.

In this embodiment, the first group of CSI-RS resources is recorded as CSI-RS resource 1, and the two CSI-RSs included therein are respectively recorded as CSI-RS 11 and CSI-RS 12. The second group of CSI-RS resources is recorded as CSI-RS resource 2, and the two CSI-RSs included therein are respectively recorded as CSI-RS 21 and CSI-RS 22.

On the one hand, the frequency domain configuration of CSI-RS 11 and CSI-RS 12 is as follows: the frequency domain position of CSI-RS 11 is the same as the frequency domain position of CSI-RS 12.

The time domain configuration of CSI-RS 11 and CSI-RS 12 is as follows: the periodicity of CSI-RS 11 is the same as the periodicity of CSI-RS 12, the slot offset of CSI-RS 11 is the same as the slot offset of CSI-RS 12, and the symbols occupied by CSI-RS 11 and CSI-RS 12 in one RB do not overlap.

The port configuration of CSI-RS 11 and CSI-RS 12 is as follows: In this embodiment, the number of ports of CSI-RS 11 is 2, which are respectively recorded as port #111 and port #112. The number of ports of CSI-RS 12 is 2, which are respectively recorded as port #121 and port #122. Then port #111 corresponds to port #121, port #112 corresponds to port #122, or port #111 corresponds to port #122, and port #112 corresponds to port #121.

On the other hand, the frequency domain configuration of CSI-RS 21 and CSI-RS 22 is as follows: the frequency domain position of CSI-RS 21 is a subset of the frequency domain position of CSI-RS 22.

The time domain configuration of CSI-RS 21 and CSI-RS 22 is as follows: the periodicity of CSI-RS 21 is the same as the periodicity of CSI-RS 22, and the slot offset of CSI-RS 21 is greater than the slot offset of CSI-RS 22, so that CSI-RS 21 and CSI -RS 22 are in different slots.

The port configuration of CSI-RS 21 and CSI-RS 22 is as follows: In this embodiment, the number of ports of CSI-RS 21 is 4, which are respectively recorded as port #211, port #212, port #213 and port #214. The number of ports of CSI-RS 22 is 2, which are respectively recorded as port #221 and port #222. Then port #211 and port #212 correspond to port #221, and port #213 and port #214 correspond to port #222.

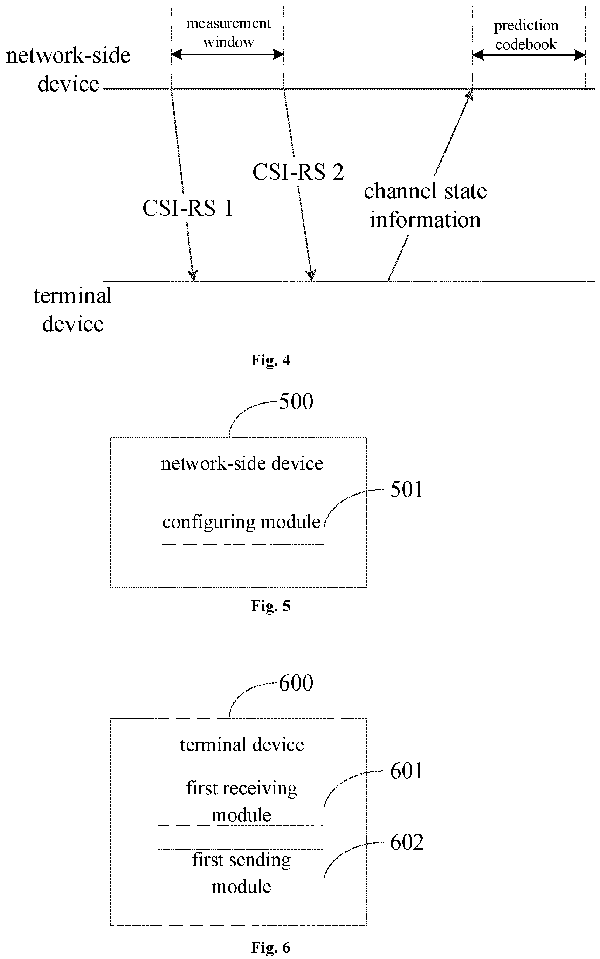

As shown in Figure 4, the network-side device sends CSI-RS 11, CSI-RS 12, CSI-RS 21 and CSI-RS 22 to the terminal device. The terminal device receives CSI-RS 11, CSI-RS 12, CSI-RS 21 and CSI-RS 22. The terminal device can measure the first sub-channel state information and the first sub-Doppler information based on CSI-RS 11 and CSI-RS 12, and the terminal device can measure the second sub-channel state information and the second sub-Doppler information based on CSI-RS 21 and CSI-RS 22.

The terminal device determines an average value of the first sub-CSI and the second sub-CSI as the final CSI, and the terminal device determines an average value of the first sub-Doppler information and the second sub-Doppler information as the final Doppler information.

It should be noted that, in some embodiments, the network-side device may be configured with only CSI-RS resource 1 or CSI-RS resource 2. In the case where the network-side device is configured with only CSI-RS resource 1, the network-side device sends CSI-RS 11 and CSI-RS 12 to the terminal device, and the terminal device can measure and obtain the first sub-state information and the first sub-Doppler information based on CSI-RS 11 and CSI-RS 12, and the first sub-state information and the first sub-Doppler information are the final reported state information and Doppler information.

Similarly, when the network-side device is only configured with CSI-RS resource 2, the network-side device sends CSI-RS 21 and CSI-RS 22 to the terminal device, and the terminal device can measure the second sub-state information and the second sub-Doppler information based on CSI-RS 21 and CSI-RS 22, and the second sub-state information and the second sub-Doppler information are the final reported state information and Doppler information.

The terminal device selects J Doppler domain vectors to construct a Doppler subspace, and calculates the channel correlation coefficient of the downlink channel in this Doppler subspace, where the dimension of the Doppler domain vector is N, and J and N are both positive integers configured by high-level signaling. The terminal device selects J Doppler domain vectors and the corresponding channel correlation coefficients as part of the PMI, and reports them to the network-side device together with other CSI information.

After receiving the CIS carrying the Doppler information, the network-side device calculates and predicts the scheduling information and the codebook for a subsequent periodicity of time according to the CIS carrying the Doppler information.

The embodiment of the present disclosure also provides a network-side device. Referring to Figure 5, which is one of the structural diagrams of the network-side device provided by the embodiment of the present disclosure. Since the principle of solving the problem by the network-side device is similar to the configuration method of the reference signal in the embodiment of the present disclosure, the implementation of the network-side device can refer to the implementation of the method, and the repeated parts will not be repeated.

As shown in FIGS, the network-side device 500 includes:

a configuring module 501, configured to configure at least one group of reference signal resources, each group of reference signal resources includes at least two reference signals.

Optionally, the first reference signal and the second reference signal are any two reference signals of the at least two reference signals;

the frequency domain resources occupied by the first reference signal are at least a part of the frequency domain resources occupied by the second reference signal; and/or,
the time domain resources occupied by the first reference signal and the time domain resources occupied by the second reference signal are different; and/or,

each first port of the first reference signal corresponds to at least one second port of the second reference signal, and each second port corresponds to one first port.

Optionally, the frequency domain resources occupied by the first reference signal and the frequency domain resources occupied by the second reference signal are the same.

Optionally, the first reference signal is configured with a first periodicity and a first slot offset, the second reference signal is configured with a second periodicity and a second slot offset, the first slot offset is smaller than the first periodicity, and the second slot offset is smaller than the second periodicity.

Optionally, the first periodicity and the second periodicity are the same, and the first slot offset and the second slot offset are different;

or,

the first periodicity is the same as the second periodicity, the first slot offset is the same as the second slot offset, and the first reference signal and the second reference signal occupy different time domain resources.

Optionally, the at least two reference signals include a channel state information reference signal.

Optionally, the network-side device 500 further includes:

a second sending module, configured to send the at least two reference signals to the terminal device.

Optionally, the network-side device 500 further includes:

a second receiving module, configured to receive the channel state information reported by the terminal device.

Optionally, the channel state information includes Doppler information.

Optionally, the Doppler information includes at least one of the following: a Doppler spectrum, a Doppler frequency offset, and a power delay spectrum.

The network-side device 500 in an embodiment of the present disclosure can execute each step of the above-mentioned reference signal configuration method embodiment, and its implementation principle and technical effect are similar, which will not be repeated in this embodiment.

The network-side device 500 of the embodiment of the present disclosure includes a configuring module 501, which is used to configure at least one group of reference signal resources, each group of reference signal resources includes at least two reference signals. Through the above settings, the network-side device 500 can configure at least two reference signals, so that the terminal device can measure the channel state information within a periodicity of time based on the two reference signals, improve the efficiency of channel state information measurement, and then reduce the number of times the reference signal is sent and the number of times the reported state information is received, thereby reducing the resource overhead of the reference signal, and at the same time, it is possible to improve the accuracy of state information feedback based on the reference signal.

The embodiment of the present disclosure also provides a terminal device. Referring to Fig.6, which is a structural diagram of the terminal device provided by the embodiment of the present disclosure. Since the principle of the terminal device to solve the problem is similar to the method for reporting state information in the embodiment of the present disclosure, the implementation of the terminal device can refer to the implementation of the method, and the repeated parts will not be repeated.

As shown in FIG. 6, the terminal device 600 includes:

a first receiving module 601, configured to receive at least two reference signals;

a first sending module 602, configured to send channel state information.

Optionally, the channel state information includes Doppler information.

Optionally, the Doppler information includes at least one of the following: a Doppler spectrum, a Doppler frequency offset, and a power delay spectrum.

Optionally, the channel state information includes at least a set of values, and the set of values includes at least a delay and a power corresponding to the delay.

Optionally, the first reference signal and the second reference signal are any two reference signals of the at least two reference signals;

the frequency domain resources occupied by the first reference signal are at least a part of the frequency domain resources occupied by the second reference signal; and/or,

the time domain resources occupied by the first reference signal and the time domain resources occupied by the second reference signal are different; and/or,

each first port of the first reference signal corresponds to at least one second port of the second reference signal, and each second port corresponds to one first port.

Optionally, the frequency domain resources occupied by the first reference signal and the frequency domain resources occupied by the second reference signal are the same.

Optionally, the first reference signal is configured with a first periodicity and a first slot offset, the second reference signal is configured with a second periodicity and a second slot offset, the first slot offset is smaller than the first periodicity, and the second slot offset is smaller than the second periodicity.

Optionally, the first periodicity and the second periodicity are the same, and the first slot offset and the second slot offset are different;

or,

the first periodicity is the same as the second periodicity, the first slot offset is the same as the second slot offset, and the first reference signal and the second reference signal occupy different time domain resources.

Optionally, the at least two reference signals include a channel state information reference signal.

Optionally, the channel state information includes a first vector and a first coefficient.

Optionally, the dimension of the first vector is N, where N is a positive integer;

Alternatively, the dimension N of the first vector satisfies:

$$\mathrm{N} = N_{Brust} \times R_{Brust};$$

where $N_{Brust}$ is a positive integer, $R_{Brust}$ is a positive integer.

Optionally, the number of the first vectors is J, where J is a positive integer;

Alternatively, the number J of the first vectors satisfies:

$$\mathrm{J} = P_t N_{Brust};$$

where $P_t$ is a positive integer.

Optionally, the channel state information is used to determine a codebook, where lthe codebook of the layer $W^l$ satisfies:

$$W^l = \begin{bmatrix} \sum_{i=0}^{L-1} v_i p_{l,0}^{(1)} \sum_{t=0}^{M_t-1} y_l^{(t)} p_{l,i,f}^{(2)} \varphi_{l,i,f} \\ \sum_{i=0}^{L-1} v_i p_{l,1}^{(1)} \sum_{t=0}^{M_t-1} y_l^{(t)} p_{l,i+L,f}^{(2)} \varphi_{l,i+L,f} \end{bmatrix};$$

where $v_i$ represents the *i-th* second vector, $p_{l,0}^{(1)}$ represents a reference amplitude in a first polarization direction, $p_{l,1}^{(1)}$ represents a reference amplitude in a second polarization direction; $y_l^{(t)}$ represents the *t-th* first vector of the *l-th* layer; $p_{l,i,t}^{(2)}$ represents an amplitude corresponding to the *t-th* first vector on the *i-th* second vector in the first polarization direction of the *l-th* layer; $\varphi_{l,i,t}$ represents a phase corresponding to the *t-th* first vector on the *i-th* second vector in the first polarization direction of the *l-th* layer; $p_{l,i+L,t}^{(2)}$ represents an amplitude corresponding to the *t-th* first vector on the *i-th* second vector in the second polarization direction of the *l-th* layer; $\varphi_{l,i+L,t}$ represents a phase corresponding to the *t-th* first vector on the *i- th* second vector in the second polarization direction of the *l-th* layer, t is a positive integer greater than or equal to 0 and less than J; *i* is a positive integer greater than or equal to 0 and less than *L, L* is a positive integer; *l* is a positive integer greater than 0 and less than or equal to *v, v* is a positive integer.

Optionally, the first coefficient includes the reference amplitude, the amplitude and the phase.

The terminal device 600 in an embodiment of the present disclosure can execute the above-mentioned state information reporting method embodiment, and its implementation principle and technical effect are similar, which will not be repeated in this embodiment.

The terminal device 600 of the embodiment of the present disclosure includes a first receiving module 601, which

# EP 4 510 688 A1

is used to receive at least two reference signals; and a first sending module 602, which is used to send channel state information. Through the above settings, the network-side device can configure at least two reference signals, so that the terminal device 600 can measure the channel state information within a periodicity of time based on the two reference signals, improve the efficiency of channel state information measurement, and then reduce the number of times the reference signal is sent and the number of times the reported state information is received, thereby reducing the resource overhead of the reference signal, and at the same time providing the possibility of improving the accuracy of state information feedback based on the reference signal.

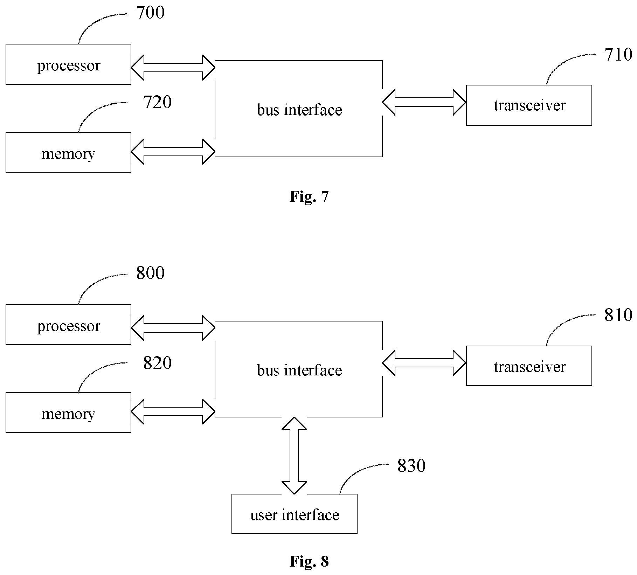

The embodiment of the present disclosure also provides a network-side device. Since the principle of solving the problem by the network-side device is similar to the configuration method of the reference signal in the embodiment of the present disclosure, the implementation of the network-side device can refer to the implementation of the method, and the repeated parts are not repeated. As shown in Figure 7, the network-side device of the embodiment of the present disclosure includes: a processor 700, which is used to read the program in the memory 720 and execute the following process:

configuring at least one group of reference signal resources, each group of reference signal resources including at least two reference signals.

In FIG. 7, the bus architecture may include any number of interconnected buses and bridges, specifically one or more processors represented by processor 700 and various circuits of memory represented by memory 720 are linked together. The bus architecture may also link together various other circuits such as peripherals, voltage regulators, and power management circuits, which are well known in the art and are therefore not further described herein. The bus interface provides an interface. The transceiver 710 may be a plurality of components, namely, a transmitter and a transceiver, providing a unit for communicating with various other devices on a transmission medium. The processor 700 is responsible for managing the bus architecture and general processing, and the memory 720 may store data used by the processor 700 when performing operations.

Optionally, the processor 700 is further configured to read a program in the memory 720 and execute the following steps:

sending the at least two reference signals to the terminal device through the transceiver 710;
the transceiver 710 is configured to receive and send data under the control of the processor 700.

Optionally, the processor 700 is further configured to read a program in the memory 720 and execute the following steps:

receiving the channel state information reported by the terminal device through the transceiver 710.

Optionally, the first reference signal and the second reference signal are any two reference signals of the at least two reference signals;

the frequency domain resources occupied by the first reference signal are at least a part of the frequency domain resources occupied by the second reference signal; and/or,
the time domain resources occupied by the first reference signal and the time domain resources occupied by the second reference signal are different; and/or,
each first port of the first reference signal corresponds to at least one second port of the second reference signal, and each second port corresponds to one first port.

Optionally, the frequency domain resources occupied by the first reference signal and the frequency domain resources occupied by the second reference signal are the same.

Optionally, the first reference signal is configured with a first periodicity and a first slot offset, the second reference signal is configured with a second periodicity and a second slot offset, the first slot offset is smaller than the first periodicity, and the second slot offset is smaller than the second periodicity.

Optionally, the first periodicity and the second periodicity are the same, and the first slot offset and the second slot offset are different;

or,

the first periodicity is the same as the second periodicity, the first slot offset is the same as the second slot offset, and the first reference signal and the second reference signal occupy different time domain resources.

Optionally, the at least two reference signals include a channel state information reference signal.

Optionally, the channel state information includes Doppler information.

Optionally, the Doppler information includes at least one of the following: a Doppler spectrum, a Doppler frequency offset, and a power delay spectrum.

The network-side device in an embodiment of the present disclosure can execute the above-mentioned reference signal configuration method embodiment, and its implementation principle and technical effect are similar, which will not be repeated in this embodiment.

The embodiment of the present disclosure also provides a terminal device. Since the principle of the terminal device to solve the problem is similar to the method for reporting state information in the embodiment of the present disclosure, the implementation of the terminal device can refer to the implementation of the method, and the repeated parts will not be repeated. As shown in Figure 8, the terminal device of the embodiment of the present disclosure includes:

The processor 800 is used to read the program in the memory 820 and execute the following process: receiving at least two reference signals by transceiver 810;

The channel state information is sent via the transceiver 810.

The transceiver 810 is configured to receive and send data under the control of the processor 800.

In Figure 8, the bus architecture may include any number of interconnected buses and bridges, specifically one or more processors represented by processor 800 and various circuits of memory represented by memory 820 are linked together. The bus architecture can also link various other circuits such as peripherals, regulators, and power management circuits together, which are all well known in the art and are therefore not further described herein. The bus interface provides an interface. The transceiver 810 can be a plurality of components, namely, a transmitter and a receiver, providing a unit for communicating with various other devices on a transmission medium. For different user devices, the user interface 830 can also be an interface that can be connected to external or internal devices, and the connected devices include but are not limited to keypads, displays, speakers, microphones, joysticks, etc.

The processor 800 is configured to manage the bus architecture and general processing, and the memory 820 can store data used by the processor 800 when performing operations.

Optionally, the channel state information includes Doppler information.

Optionally, the Doppler information includes at least one of the following: a Doppler spectrum, a Doppler frequency offset, and a power delay spectrum.

Optionally, the channel state information includes at least a set of values, and the set of values includes at least a delay and a power corresponding to the delay.

Optionally, the first reference signal and the second reference signal are any two reference signals of the at least two reference signals;

the frequency domain resources occupied by the first reference signal are at least a part of the frequency domain resources occupied by the second reference signal; and/or,

the time domain resources occupied by the first reference signal and the time domain resources occupied by the second reference signal are different; and/or,

each first port of the first reference signal corresponds to at least one second port of the second reference signal, and each second port corresponds to one first port.

Optionally, the frequency domain resources occupied by the first reference signal and the frequency domain resources occupied by the second reference signal are the same.

Optionally, the first reference signal is configured with a first periodicity and a first slot offset, the second reference signal is configured with a second periodicity and a second slot offset, the first slot offset is smaller than the first periodicity, and the second slot offset is smaller than the second periodicity.

Optionally, the first periodicity and the second periodicity are the same, and the first slot offset and the second slot offset are different;

or,

the first periodicity is the same as the second periodicity, the first slot offset is the same as the second slot offset, and the first reference signal and the second reference signal occupy different time domain resources.

Optionally, the at least two reference signals include a channel state information reference signal.

Optionally, the channel state information includes a first vector and a first coefficient.

Optionally, the dimension of the first vector is N, where N is a positive integer;

Alternatively, the dimension N of the first vector satisfies:

$$\text{N} = N_{Brust} \times R_{Brust};$$

where $N_{Brust}$ is a positive integer, $R_{Brust}$ is a positive integer.

Optionally, the number of the first vectors is J, where J is a positive integer;

Alternatively, the number J of the first vectors satisfies:

$$J = P_t N_{Brust};$$

$P_t$ is a positive integer.

Optionally, the channel state information is used to determine a codebook, the codebook $W^l$ of the *l-th* layer satisfies:

$$W^l = \begin{bmatrix} \sum_{i=0}^{L-1} v_i p_{l,0}^{(1)} \sum_{t=0}^{M_t-1} y_l^{(t)} p_{l,i,f}^{(2)} \varphi_{l,i,f} \\ \sum_{i=0}^{L-1} v_i p_{l,1}^{(1)} \sum_{t=0}^{M_t-1} y_l^{(t)} p_{l,i+L,f}^{(2)} \varphi_{l,i+L,f} \end{bmatrix};$$

where $v_i$ represents the *i-th* second vector, $p_{l,0}^{(1)}$ represents a reference amplitude in a first polarization direction, $p_{l,1}^{(1)}$ represents a reference amplitude in a second polarization direction; $y_l^{(t)}$ represents the *t-th* first vector of the *l-th* layer; $p_{l,i,t}^{(2)}$ represents an amplitude corresponding to the *t-th* first vector on the *i-th* second vector in the first polarization direction of the *l-th* layer; $\varphi_{l,i,t}$ represents a phase corresponding to the *t-th* first vector on the *i-th* second vector in the first polarization direction of the *l-th* layer; $p_{l,i+L,t}^{(2)}$ represents an amplitude corresponding to the *t-th* first vector on the *i-th* second vector in the second polarization direction of the *l-th* layer; $\varphi_{l,i+L,t}$ represents a phase corresponding to the *t-th* first vector on the *i- th* second vector in the second polarization direction of the *l-th* layer, t is a positive integer greater than or equal to 0 and less than J; *i* is a positive integer greater than or equal to 0 and less than *L, L* is a positive integer; *l* is a positive integer greater than 0 and less than or equal to v, v is a positive integer.

Optionally, the first coefficient includes the reference amplitude, the amplitude and the phase.

The terminal device in an embodiment of the present disclosure can execute the above-mentioned state information reporting method embodiment, and its implementation principle and technical effect are similar, which will not be repeated in this embodiment.

An embodiment of the present application also provides a readable storage medium, on which a program is stored. When the program is executed by a processor, the various processes of the method embodiment shown in Figure 2 or Figure 3 above are implemented, and the same technical effect can be achieved. To avoid repetition, it will not be repeated here.

In the several embodiments provided in the present application, it should be understood that the disclosed methods and devices can be implemented in other ways. For example, the device embodiments described above are only schematic. For example, the division of the units is only a logical function division. There may be other division methods in actual implementation, such as multiple units or components can be combined or integrated into another system, or some features can be ignored or not executed. Another point is that the mutual coupling or direct coupling or communication connection shown or discussed can be through some interfaces, indirect coupling or communication connection of devices or units, which can be electrical, mechanical or other forms.

In addition, each functional unit in each embodiment of the present disclosure may be integrated into one processing unit, or each unit may be physically included separately, or two or more units may be integrated into one unit. The above-mentioned integrated unit may be implemented in the form of hardware or in the form of hardware plus software functional units.

The above-mentioned integrated unit implemented in the form of a software functional unit can be stored in a computer-readable storage medium. The above-mentioned software functional unit is stored in a storage medium, including a number of instructions for enabling a computer device (which can be a personal computer, a server, or a network device, etc.) to execute some steps of the sending and receiving method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program codes.

The above is a preferred embodiment of the present disclosure. It should be pointed out that for ordinary technicians in this technical field, several improvements and modifications can be made without departing from the principles described in the present disclosure. These improvements and modifications should also be regarded as the scope of protection of the present disclosure.

**Claims**

1. A reference signal configuration method, applied to a network-side device, comprising:
configuring at least one group of reference signal resources, each group of reference signal resources comprising at least two reference signals.

2. The method according to claim 1, wherein a first reference signal and a second reference signal are any two reference signals of the at least two reference signals;

   frequency domain resources occupied by the first reference signal are at least a part of frequency domain resources occupied by the second reference signal; and/or,
   time domain resources occupied by the first reference signal and time domain resources occupied by the second reference signal are different; and/or,
   each first port of the first reference signal corresponds to at least one second port of the second reference signal, and each second port corresponds to one first port.

3. The method according to claim 2, wherein the frequency domain resources occupied by the first reference signal and the frequency domain resources occupied by the second reference signal are the same.

4. The method according to claim 2, wherein the first reference signal is configured with a first periodicity and a first slot offset, the second reference signal is configured with a second periodicity and a second slot offset, the first slot offset is smaller than the first periodicity, and the second slot offset is smaller than the second periodicity.

5. The method according to claim 4, wherein the first periodicity and the second periodicity are the same, and the first slot offset and the second slot offset are different;
or,
the first periodicity is the same as the second periodicity, the first slot offset is the same as the second slot offset, and the first reference signal and the second reference signal occupy different time domain resources.

6. The method according to claim 1, wherein the at least two reference signals comprise a channel state information reference signal.

7. The method according to claim 1, further comprising:
sending the at least two reference signals to a terminal device.

8. The method according to claim 7, further comprising:
receiving channel state information reported by the terminal device.

9. The method according to claim 8, wherein the channel state information comprises Doppler information.

10. The method according to claim 9, wherein the Doppler information comprises at least one of the following: a Doppler spectrum, a Doppler frequency offset, and a power delay spectrum.

11. A method for reporting state information, applied to a terminal device, comprising:

    receiving at least two reference signals;
    sending channel state information.

12. The method according to claim 11, wherein the channel state information comprises Doppler information.

13. The method according to claim 12, wherein the Doppler information comprises at least one of the following: a Doppler spectrum, a Doppler frequency offset, and a power delay spectrum.

14. The method according to claim 11, wherein the channel state information comprises at least a set of values, and the set of values comprises at least a delay and a power corresponding to the delay.

15. The method according to claim 11, wherein the first reference signal and the second reference signal are any two reference signals of the at least two reference signals;

frequency domain resources occupied by the first reference signal are at least a part of frequency domain resources occupied by the second reference signal; and/or,
time domain resources occupied by the first reference signal and time domain resources occupied by the second reference signal are different; and/or,
each first port of the first reference signal corresponds to at least one second port of the second reference signal, and each second port corresponds to one first port.

16. The method according to claim 15, wherein the frequency domain resources occupied by the first reference signal and the frequency domain resources occupied by the second reference signal are the same.

17. The method according to claim 15, wherein the first reference signal is configured with a first periodicity and a first slot offset, the second reference signal is configured with a second periodicity and a second slot offset, the first slot offset is smaller than the first periodicity, and the second slot offset is smaller than the second periodicity.

18. The method according to claim 17, wherein the first periodicity and the second periodicity are the same, and the first slot offset and the second slot offset are different;
or,
the first periodicity is the same as the second periodicity, the first slot offset is the same as the second slot offset, and the first reference signal and the second reference signal occupy different time domain resources.

19. The method according to claim 11, wherein the at least two reference signals comprise a channel state information reference signal.

20. The method according to claim 11, wherein the channel state information comprises a first vector and a first coefficient.

21. The method according to claim 20, wherein a dimension of the first vector is $N$, and $N$ is a positive integer;

or, a dimension N of the first vector satisfies:

$$\mathrm{N} = N_{Brust} \times R_{Brust};$$

wherein, $N_{Brust}$ is a positive integer, $R_{Brust}$ is a positive integer.

22. The method according to claim 21, wherein a number of the first vectors is J, and $J$ is a positive integer;

or, a number J of the first vectors satisfies:

$$\mathrm{J} = P_t N_{Brust};$$

wherein $P_t$ is a positive integer.

23. The method according to claim 22, wherein the channel state information is configured to determine a codebook, wherein the codebook $W^l$ of the *l-th* layer satisfies:

$$W^l = \begin{bmatrix} \sum_{i=0}^{L-1} v_i p_{l,0}^{(1)} \sum_{t=0}^{M_t-1} y_l^{(t)} p_{l,i,f}^{(2)} \varphi_{l,i,f} \\ \sum_{i=0}^{L-1} v_i p_{l,1}^{(1)} \sum_{t=0}^{M_t-1} y_l^{(t)} p_{l,i+L,f}^{(2)} \varphi_{l,i+L,f} \end{bmatrix};$$

wherein $v_i$ represents the *i-th* second vector, $p_{l,0}^{(1)}$ represents a reference amplitude in a first polarization direction, $p_{l,1}^{(1)}$ represents a reference amplitude in a second polarization direction; $y_l^{(t)}$ represents the *t-th* first vector of the *l-th* layer; $p_{l,i,t}^{(2)}$ represents an amplitude corresponding to the *t-th* first vector on the *i-th* second vector in the first polarization direction of the *l-th* layer; $\varphi_{l,i,t}$ represents a phase corresponding to the *t-th* first vector on the *i-th* second vector in the first polarization direction of the *l-th* layer; $p_{l,i+L,t}^{(2)}$ represents an amplitude corresponding to the *t-th* first vector on the *i-th* second vector in the second polarization direction of the *l-th* layer; $\varphi_{l,i+L,t}$ represents a phase corresponding to the *t-th* first vector on the *i- th* second vector in the second polarization direction of the *l-th* layer, *t* is a positive integer greater than or equal to 0 and less than *J; i* is a positive integer greater than or equal to 0 and less than *L, L* is a positive integer; *l* is a positive integer greater than 0 and less than or equal to *v, v* is a positive integer.

24. The method according to claim 23, wherein the first coefficient comprises the reference amplitude, the amplitude and the phase.

25. A network-side device, comprising:
a configuring module, configured to configure at least one group of reference signal resources, each group of reference signal resources comprising at least two reference signals.

26. A terminal device, comprising:

a first receiving module, configured to receive at least two reference signals;
a first sending module, configured to send channel state information.

27. A network-side device, comprising: a transceiver, a memory, a processor, and a computer program stored in the memory and executable on the processor; wherein
the processor is configured to read the program in the memory to perform the method according to any one of claims 1 to 10.

28. A terminal device, comprising: a transceiver, a memory, a processor, and a computer program stored in the memory and executable on the processor; wherein
the processor is configured to read the program in the memory to perform the method according to any one of claims 11 to 24.

29. A readable storage medium for storing a program, wherein when the program is executed by a processor to perform the method according to any one of claims 1 to 10, or perform the method according to any one of claims 11 to 24.

**Fig.1**

configuring at least one group of reference signal resources, each group of reference signal resources including at least two reference signals —101

**Fig. 2**

receiving at least two reference signals —201

sending channel state information —202

**Fig. 3**

Fig. 4

Fig. 5

Fig. 6

700

processor

720

memory

bus interface

transceiver

710

**Fig. 7**

800

processor

820

memory

bus interface

transceiver

810

user interface

830

**Fig. 8**

## INTERNATIONAL SEARCH REPORT

| International application No. |
| --- |
| **PCT/CN2023/091601** |

**A.      CLASSIFICATION OF SUBJECT MATTER**

H04W24/10(2009.01)i;  H04W72/04(2023.01)i;  H04L5/00(2006.01)i

According to International Patent Classification (IPC) or to both national classification and IPC

**B.      FIELDS SEARCHED**

Minimum documentation searched (classification system followed by classification symbols)

IPC:H04W24/-; H04W72/-; H04L5/-

Documentation searched other than minimum documentation to the extent that such documents are included in the fields searched

Electronic data base consulted during the international search (name of data base and, where practicable, search terms used)

CNTXT; CNABS; CNKI; 百度, BAIDU: 信道状态信息, 参考信号, 时域, 频域, 资源, 端口, 反馈, 两个, 多个, 周期, 时隙, 多普勒, 向量, 系数, 相位, 幅度; VEN; USTXT; EPTXT; WOTXT; IEEE; 3GPP: CSI, reference signal, multi+, port?, feedback, time domain, frequency domain, period, slot?, collect+, doppler, coefficient, vector?, phase, amplitude

**C.      DOCUMENTS CONSIDERED TO BE RELEVANT**

| Category* | Citation of document, with indication, where appropriate, of the relevant passages | Relevant to claim No. |
| --- | --- | --- |
| X | WO 2021102952 A1 (ZTE CORP.) 03 June 2021 (2021-06-03) <br> description, page 4, line 16-page 35, line 4, and figures 1-10 | 1-29 |
| X | CN 108616345 A (HUAWEI TECHNOLOGIES CO., LTD.) 02 October 2018 (2018-10-02) <br> description, paragraphs [0110]-[0165] | 1-29 |
| X | CN 109151887 A (HUAWEI TECHNOLOGIES CO., LTD.) 04 January 2019 (2019-01-04) <br> description, paragraphs [0086]-[0381], and figures 1-10 | 1-29 |
| X | CN 113517965 A (VIVO COMMUNICATION TECHNOLOGY CO., LTD.) 19 October 2021 (2021-10-19) <br> description, paragraphs [0086]-[0381] | 1-29 |
| A | US 2021014848 A1 (ALEXEI DAVYDOV et al.) 14 January 2021 (2021-01-14) <br> entire document | 1-29 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 July 2023** | **01 August 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**EP 4 510 688 A1**

<table>
<tr><th colspan="3">INTERNATIONAL SEARCH REPORT</th><th colspan="2">International application No.</th></tr>
<tr><td colspan="3">Information on patent family members</td><td colspan="2">**PCT/CN2023/091601**</td></tr>
</table>

| Patent document cited in search report | | | Publication date (day/month/year) | Patent family member(s) | | | Publication date (day/month/year) |
|---|---|---|---|---|---|---|---|
| WO | 2021102952 | A1 | 03 June 2021 | CA | 3157045 | A | 29 November 2019 |
| | | | | CN | 114557073 | A | 27 May 2022 |
| | | | | IN | 2022017029145 | A | 20 May 2022 |
| | | | | US | 2022286257 | A1 | 08 September 2022 |
| | | | | EP | 4066557 | A1 | 05 October 2022 |
| | | | | EP | 4066557 | A4 | 21 December 2022 |
| CN | 108616345 | A | 02 October 2018 | US | 2019268199 | A1 | 29 August 2019 |
| | | | | US | 10608857 | B2 | 31 March 2020 |
| | | | | CA | 3024585 | A1 | 25 May 2019 |
| | | | | CA | 3024585 | C | 16 February 2021 |
| | | | | JP | 2020502830 | A | 23 January 2020 |
| | | | | JP | 6667678 | B2 | 18 March 2020 |
| | | | | BR | 112018076850 | A2 | 16 July 2019 |
| | | | | US | 2020195479 | A1 | 18 June 2020 |
| | | | | US | 11303490 | B2 | 12 April 2022 |
| | | | | EP | 3509241 | A1 | 10 July 2019 |
| | | | | EP | 3509241 | A4 | 02 October 2019 |
| | | | | WO | 2019100722 | A1 | 31 May 2019 |
| | | | | CN | 108616345 | B | 26 March 2019 |
| | | | | VN | 64888 | A | 26 August 2019 |
| CN | 109151887 | A | 04 January 2019 | EP | 3637838 | A1 | 15 April 2020 |
| | | | | EP | 3637838 | A4 | 10 June 2020 |
| | | | | EP | 3637838 | B1 | 13 October 2021 |
| | | | | US | 2020119797 | A1 | 16 April 2020 |
| | | | | US | 11283503 | B2 | 22 March 2022 |
| | | | | WO | 2018228571 | A1 | 20 December 2018 |
| | | | | IN | 202037001754 | A | 14 February 2020 |
| CN | 113517965 | A | 19 October 2021 | WO | 2021204154 | A1 | 14 October 2021 |
| US | 2021014848 | A1 | 14 January 2021 | US | 11671954 | B2 | 06 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210486820